# EUROPEAN PATENT APPLICATION

(11) **EP 4 778 809 A1**
(43) Date of publication of application: **22.07.2026**
(21) Application number: 25152375.9
(22) Date of filing: 16.01.2025
(51) Int. Cl.: B62D 6/00, B62D 5/32, B62D 5/09, B62D 5/04

(54) **HYDRAULIC STEERING CONTROL SYSTEM, HYDRAULIC STEERING SYSTEM, AND METHOD FOR CONTROLLING A HYDRAULIC STEERING SYSTEM**

(71) Applicant: Danfoss Power Solutions ApS, 6430 Nordborg (DK)
(72) Inventor: Rudolph, Tom, 6430 Nordborg (DK); Sorensen, Ole Falck, 6430 Nordborg (DK); Hoeck Petersen, Morten, 6430 Nordborg (DK); Enggaard, Michael, 6430 Nordborg (DK)
(74) Representative: Keil & Schaafhausen Patentanwälte PartGmbB

(57) **Abstract**

The invention relates to a hydraulic steering control system (4) for a hydraulic steering system (1) for a vehicle (100). The hydraulic steering control system (4) comprises a hydraulic steering unit (5a) for fluid coupling with a steering cylinder (2), a mechanical steering input (6) that is mechanically coupled to the hydraulic steering unit (5a) for transferring mechanical input movements (MIL, MIR) in two opposite steering directions to the hydraulic steering unit (5a) for allowing manual control of the hydraulic steering unit (5a) by an operator, and an electric motor (9) coupled to the mechanical steering input (6) for applying force feedback for the operator to the mechanical steering input (6). For providing an easy and efficient solution for improving a manual emergency steering with the hydraulic steering unit (5a), the hydraulic steering control system (4) provides a turn assist mode (TAM) in which the electric motor (9) supports mechanical input movements (MIL, MIR) applied to the mechanical steering input (6) by exerting additional torque in the same respective steering direction to the mechanical steering input (6). The invention further relates to a hydraulic steering system (1) and a method for controlling a hydraulic steering system (1).

## Description

The present invention relates to a hydraulic steering control system for a hydraulic steering system for a vehicle with at least one hydraulic steering cylinder and a hydraulic supply pump, wherein the hydraulic steering control system comprises a hydraulic steering unit for fluid coupling with the at least one steering cylinder, a mechanical steering input that is mechanically coupled to the hydraulic steering unit for transferring mechanical input movements in two opposite steering directions to the hydraulic steering unit for allowing manual control of the hydraulic steering unit by an operator, and an electric motor coupled to the mechanical steering input. The invention further relates to a hydraulic steering system and a method for controlling a hydraulic steering system.

Various types of hydraulic steering systems are known. A steering command finally results in a change of a wheel angle of wheels of the vehicle with respect to a longitudinal axis of the vehicle, thereby changing a direction of movement of the vehicle.

An exemplary hydraulic steering system is, for example, shown in Figure 1 of DE 10 2007 053 024 A1. Some modifications are described in EP 2 762 387 A1. The hydraulic steering system comprises a (traditional) hydraulic steering unit and additionally an electronic valve assembly that allows for electronically controlled hydraulic steering. A steering cylinder can be actuated by the electronic valve assembly and by the hydraulic steering unit. In more detail, the hydraulic steering unit allows for manual control by mechanically turning a steering wheel.

A hydraulic (working) pressure in the hydraulic steering unit may drop or decrease for various reasons. For example, a hydraulic supply unit, e.g. a pump, for supplying the hydraulic pressure may fail. In such a case, the electronic valve assembly will not be usable for steering control any longer. The hydraulic steering unit still allows for manual pumping of the hydraulic fluid. Hence, the steering cylinder can be still actuated by mechanically turning the steering wheel even if the hydraulic supply unit fails. The hydraulic steering unit still works as a "handpump". The operator can still control the direction of movement of the vehicle.

However, the vehicle can be a large and heavy vehicle, e.g. a large tractor. The manual "emergency" steering becomes difficult in large vehicles. It might be difficult to change a direction of the vehicle very fast by the manual pumping due to the high forces/external torques that the operator must apply in order to turn the steering wheel and pump the hydraulic fluid manually.

One approach for avoiding such drawbacks in case of pump failure is to add a redundant hydraulic supply unit to the vehicle, e.g. a back-up pump. However, this makes the hydraulic steering system more complex, more expensive, and heavier.

It is therefore an object of the present invention to provide an easy and efficient solution for improving the manual emergency steering with the hydraulic steering unit.

This object is solved by hydraulic steering control system with the features according to claim 1.

The hydraulic steering control system is for a hydraulic steering system for a vehicle, wherein the hydraulic steering system has at least one hydraulic steering cylinder and a hydraulic supply unit.

The hydraulic steering control system comprises:
a hydraulic steering unit for fluid coupling with the at least one steering cylinder,
a mechanical steering input that is mechanically coupled to the hydraulic steering unit for transferring mechanical input movements in two opposite steering directions to the hydraulic steering unit for allowing manual control of the hydraulic steering unit by an operator, and
an electric motor coupled to the mechanical steering input, e.g. for applying, in a force feedback mode, force feedback for the operator to the mechanical steering input.

The hydraulic steering control system includes (is configured to provide, e.g. is switchable to) a turn assist mode in which the electric motor supports mechanical input movements/commands applied to the mechanical steering input (e.g. by the operator) by exerting additional torque in the same respective steering direction to the mechanical steering input.

This is an easy and efficient solution for improving the manual emergency steering with the hydraulic steering unit. In the turn assist mode, the electric motor helps the operator to steer with the hydraulic steering unit.

In more detail, in the turn assist mode, the electric motor assists the operator in steering the vehicle by inputting the mechanical steering movements/commands into the hydraulic steering unit. The electric motor aids the operator in the manual pumping of the hydraulic fluid with the hydraulic steering unit. Especially, the electric motor may be configured amplify the external torques applied by the operator by exerting the additional torque.

A turning speed of a steering column and/or a steering wheel in "emergency steering" (without sufficient hydraulic pressure) can be increased. Accordingly, a turning speed of a rotary meter in the hydraulic steering unit for providing manual pumping action is increased. Finally, a turning speed of the vehicle is increased.

The direction of movement of the vehicle can be changed more easily and faster by the operator.

The electric motor is used in a synergistic manner. At the one hand, in the force feedback mode, the electric motor provides a better steering feeling to the operator. In the turn assist mode, e.g. in an emergency case like when the hydraulic supply unit fails, the electric motor ensures that the operator can change the movement direction of the vehicle easily and fast. Especially, the operator may be able to turn the vehicle much faster in the emergency case than without the steering support of the electric motor.

The hydraulic control system comprises the hydraulic steering unit providing the manual pumping capability, e.g. at least for emergency steering. The hydraulic control system may further comprise an electronic valve assembly (an electrohydraulic valve assembly) for electrohydraulic steering. The hydraulic control system may be configured such that the electrohydraulic valve assembly can be operated for steering the vehicle (in a normal operation when a normal hydraulic pressure is available), e.g. by a joystick, a computer system, and/or a satellite navigation system, for example.

In one embodiment, the mechanical steering input includes a steering column and/or a steering wheel. For example, in the turn assist mode, the electric motor helps the operator to turn the steering wheel and/or the steering column into the desired steering direction/rotational position. The steering wheel is a well-known and intuitive way of controlling the direction of the movement of the vehicle. Operators are used to a steering wheel and will tend to operate such a steering wheel as a manner of habit if other steering approaches (e.g. the electronic steering via the electronic valve assembly) fail.

In one embodiment, the hydraulic steering control system comprises an electronic controller for controlling (at least) the electric motor. The controller may control further components of the hydraulic steering control system, e.g. the electronic valve assembly (if any). The electric motor may include the controller.

The hydraulic supply unit may include at least one pump. The pump may be configured to supply pressurized hydraulic fluid in operation.

According to one aspect, the hydraulic steering control system may be configured to automatically enable the turn assist mode when a hydraulic pressure in the hydraulic steering system is/falls below a minimum threshold (at least while the vehicle is operating). The hydraulic pressure may be a hydraulic (working) pressure, e.g. supplied from the hydraulic supply unit.

The values for the minimum threshold can vary for different machines and applications. For example, the minimum threshold can be at least 4 bar, maybe at least 5 bar. Additionally or alternatively, the minimum threshold can be 12 bar at the maximum, maybe 10 at the maximum. In one embodiment, the minimum threshold is in the range from 5 bar to 10 bar, e.g. 5 bar.

The hydraulic steering control system can comprise pressure measurement means for measuring the hydraulic pressure, e.g. the hydraulic pressure that is provided by the hydraulic supply unit. Hence, the hydraulic steering control system can itself check for whether the hydraulic pressure is sufficient for normal operation or whether the turn assist mode should be switched on.

The pressure measurement means may include at least one pressure sensor, pressure transducer and/or pressure transmitter. For example, the pressure measurement means may include (at least) one pressure sensor, maybe (at least) one pressure sensor with high reliability.

Especially, the pressure measurement means may include at least two redundant pressure sensors. The hydraulic steering control system may be configured to automatically switch to the turn assist mode if at least one of the (at least one or at least two) pressure sensors indicates that the hydraulic pressure is below the minimum threshold.

The controller may be configured to enable the turn assist mode (to switch to the turn assist mode) automatically in response to receiving at least one pre-determined signal. The predetermined signal(s) can include one of, several of, or all of the following:
- a signal that indicates failure of the hydraulic supply unit (e.g. a pump error signal),
- a measurement signal from the pressure measurement means that indicate that the hydraulic pressure is below the minimum threshold, and
- an intentional activation signal inputted by the operator (e.g. via a button, a touchscreen, or any other user input).

According to one aspect, the force feedback mode may be deactivatable. For example, the force feedback mode may be deactivatable by the operator. Additionally or alternatively, the force feedback mode may be automatically deactivated by the controller under certain operational conditions, e.g. when the electronic valve assembly is used for steering the vehicle while no mechanical input movements are applied via the mechanical steering input. The force feedback mode may be automatically deactivated while the turn assist mode is enabled.

The hydraulic steering control system (e.g. the controller thereof) many be configured to automatically disable the turn assist mode, for example when the hydraulic pressure corresponds to at least the minimum threshold. The automatic disabling may be overruled, e.g. by a corresponding user input.

The hydraulic steering control system, for example the electric motor, can include a position sensor for sensing a mechanical input position of the mechanical steering input and/or a mechanical input change speed of the mechanical steering input. For example, the electric motor may include a position sensor for measuring a rotational position of the steering column and/or of a rotor of the electric motor.

Additionally or alternatively, the hydraulic steering control system, e.g. the controller, can be configured receive and use wheel angle sensor position information. The wheel angle sensor information may be provided from one or more wheel angle sensor(s). The wheel angle sensor position information may be used for the turn assist mode, e.g. by the controller. For example, the wheel angle sensor position information can be part of an algorithm of the turn assist mode. Additionally or alternatively, the hydraulic steering control system, e.g. the controller, can be configured to use the wheel angle sensor position information for the force feedback function and/or for adjusting the restoring torques.

In one embodiment, the hydraulic steering control system comprises at least one wheel angle sensor. The wheel angle sensor(s) may be connected to the controller and provide the wheel angle sensor position information.

According to one aspect, the hydraulic steering control system, e.g. the controller, can be configured receive and use vehicle speed information. The speed information may be provided from one or more vehicle speed sensor(s). The vehicle speed information may be used for the turn assist mode, e.g. by the controller. For example, the vehicle speed information can be part of an algorithm of the turn assist mode. Additionally or alternatively, the hydraulic steering control system, e.g. the controller, can be configured to use the vehicle speed information in the force feedback mode and/or for adjusting the restoring torques.

In one embodiment, the hydraulic steering control system comprises at least one vehicle speed sensor. The vehicle speed sensor(s) may be connected to the controller and provide the vehicle speed information.

According to one aspect, the hydraulic steering control system is capable of using the electric motor for exerting restoring torques onto the mechanical steering device, e.g. for urging the steerable wheels of the vehicle towards a neutral position and/or for providing limited resistance against steering commands for actuating the steerable wheels away from the neutral position (when the user does not apply steering commands). The neutral position of the steerable wheels can correspond to the movement direction of the vehicle being straight ahead. This allows for more comfortable driving. For example, the hydraulic steering control system can be configured to use the electric motor for applying the restoring torques in the force feedback mode. The controller may be able to vary the restoring torques depending on a wheel angle and/or a vehicle speed.

In one embodiment, the hydraulic steering control system (e.g. the controller) is configured to stop applying the restoring torques onto the mechanical steering device via the electric motor when the turn assist mode is activated, maybe at least while the electric motor supports the mechanical input movements by exerting the corresponding additional torque.

The controller may be functionally connected with the position sensor, e.g. such that the controller can receive signals indication the mechanical input position of the mechanical steering input and/or the mechanical input change speed.

The mechanical input change speed (e.g. an angular speed of rotation of the steering wheel, the steering column, and/or the rotor) might be calculated based on measurements of the mechanical input positions and/or time periods between the measurements of the mechanical input positions (e.g. measuring a new mechanical input position when the mechanical input positions changes by a certain value, e.g. by 1°, and determining the time needed for this change, or sampling the mechanical input position at regular time intervals). This might be performed under control of the controller, for example.

According to one aspect, the hydraulic steering control system, e.g. the electric motor, might include a torque sensor for measuring an external torque and/or force applied to the mechanical steering input. Especially, the external torque and/or force can be the mechanical input movements/commands, especially applied by the operator.

The hydraulic steering control system, e.g. the controller, may be configured to determine the respective steering direction of the steering input movements/commands based on measurement data obtained using the position sensor and/or obtained using the torque sensor.

Additionally or alternatively, the hydraulic steering control system, e.g. the controller, may be configured to provide and/or vary the additional torque exerted by the electric motor to the mechanic steering input in the turn assist mode based on measurement data obtained using the position sensor and/or obtained using the torque sensor.

According to one aspect, the hydraulic steering control system, e.g. the controller, may be configured to provide and/or vary the additional torque exerted by the electric motor to the mechanic steering input based on the mechanical input change speed and/or the external torque applied to the mechanical steering input. For example, a higher mechanical input change speed and/or a higher external torque may result in exertion of a higher additional torque by the electric motor.

Additionally or alternatively, the hydraulic steering control system, e.g. the controller, may be configured to provide and/vary the additional torque exerted by the electric motor to the mechanic steering input based on a time for which the mechanical input movement and/or external torque is applied towards the same direction. For example, if the operator turns the steering wheel leftward for at least a predetermined time limit, application of the leftward additional torque by the electric motor may be started or increased.

According to one aspect, a maximum of the additional torque applicable by the electric motor in the turn assist mode is at least 5 Nm. This ensures that the hydraulic steering control system can provide sufficient additional torque in order to significantly help the operator in changing the direction of movement of the vehicle fast.

Additionally or alternatively, the maximum of the additional torque applicable by the electric motor in the turn assist mode is 10 Nm at the maximum, e.g. a value in the range from 8 Nm to 10 Nm. This ensures that the hydraulic steering control system will not tear the steering wheel out of the operator's hand and/or control. If too much additional torque is applied by the electric motor, it could not be possible for the operator to control the steering input.

In one embodiment, the mechanical steering input is mechanically coupled to the hydraulic steering unit via the electric motor, wherein a rotor of the electric motor transfers the mechanical input movement from the mechanical steering input to the hydraulic steering unit. In other words, the rotor of the electric motor can form part of the mechanical steering input. This allows for a small size and weight of the hydraulic steering control system.

The problem indicated above is further solved by a hydraulic steering system.

The hydraulic steering system comprises
at least one hydraulic steering cylinder;
a hydraulic supply unit; and
the hydraulic steering control system according to the present invention.

The hydraulic steering unit is fluidly connected to the hydraulic steering cylinder and the hydraulic supply unit.

The embodiments, modifications, and advantages described with respect to the hydraulic steering control system may apply accordingly regarding the hydraulic steering system, and vice versa.

The hydraulic steering system may include several steering cylinders and/or several hydraulic supply units.

Further, the object indicated above is solved by a method with the features according to claim 14.

It is a method for operating a hydraulic steering system (e.g. a hydraulic steering system according to the present invention) in a vehicle with at least one hydraulic steering cylinder, a hydraulic supply unit, a hydraulic steering unit that is in fluid coupling with the at least one steering cylinder, a mechanical steering input that is mechanically coupled to the hydraulic steering unit for transferring mechanical input movements in two opposite steering directions to the hydraulic steering unit for allowing manual control of the hydraulic steering unit by an operator, and an electric motor coupled to the mechanical steering input for applying, in a force feedback mode, force feedback for the operator to the mechanical steering input.

The method comprises supporting, in a turn assist mode, mechanical input movements, which are applied to the mechanical steering input (e.g. by the operator), by exerting additional torque in the same respective steering direction to the mechanical steering input by means of the electric motor.

The embodiments, modifications, and advantages described with respect to the at least one of the hydraulic steering control system and the hydraulic steering system may apply accordingly regarding the method, and vice versa.

For example, the method may comprise automatically enabling (e.g. switching to) the turn assist mode in response to a hydraulic pressure being below a minimum threshold.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: schematically shows an embodiment of a vehicle with a hydraulic steering system including a hydraulic steering control system according to the present invention;
- Fig. 2: schematically shows the hydraulic steering system according to Fig. 1 in more detail with an electronic valve assembly; and
- Fig. 3: schematically shows steps of a method of controlling a hydraulic steering system in a vehicle, e.g. as shown in Fig. 1, according to the present invention.

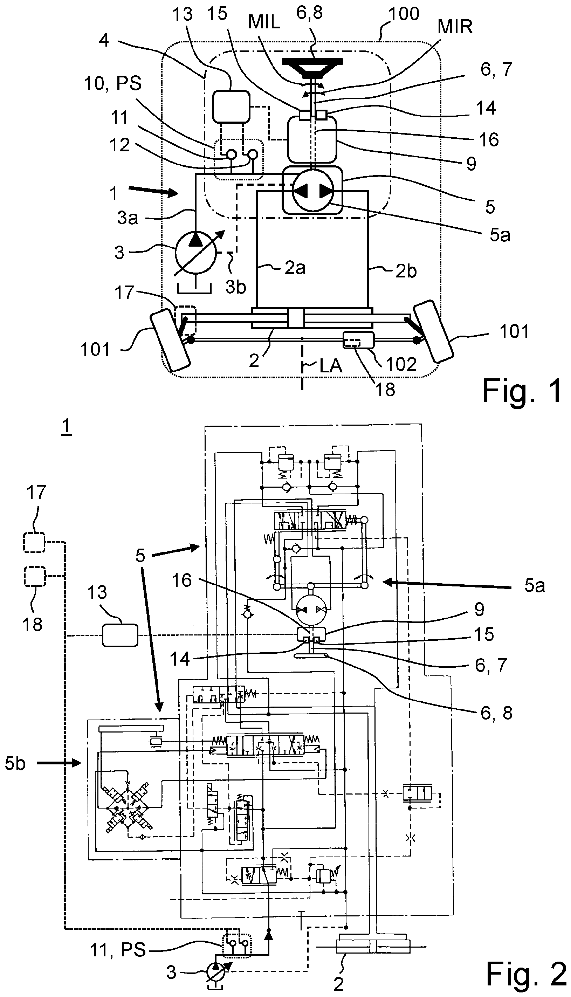

Fig. 1 shows a vehicle 100 with two steerable wheels 101. A wheel angle of the steerable wheels 101 with respect to a longitudinal axis LA of the vehicle 100 can be changed via a hydraulic steering system 1 with a hydraulic steering cylinder 2. The steerable wheels 101 are operatively connected to the hydraulic steering cylinder 2.

The vehicle 100 may be a larger vehicle, e.g. an agricultural vehicle, for example a tractor.

The hydraulic steering system 1 includes said hydraulic steering cylinder 2, a hydraulic supply unit 3, and a hydraulic steering control system 4.

The hydraulic supply unit 3 supplies pressurized hydraulic fluid to the hydraulic steering control system 4.

The hydraulic steering control system 4 controls the hydraulic steering system 1, in particular a supply of hydraulic fluid to the steering cylinder 2. It comprises a mechanical steering input 6 with a steering column 7 and a steering wheel 8 that is coupled to the steering column 7. The steering wheel 8 is operable by an operator to apply mechanical input movements to the mechanical steering input 6, especially a leftward mechanical steering input/command MIL and a rightward mechanical steering input/command MIR. The leftward mechanical steering input MIL may correspond, seen from the operator's perspective, to a counterclockwise rotation of the steering wheel 8. It corresponds to a leftward steering direction. The rightward mechanical steering input MIR may correspond, seen from the operator's perspective, to a clockwise rotation of the steering wheel 8. It corresponds to a rightward steering direction. In other words, the operator input mechanical input movements MIL, MIR in two opposite steering directions via the steering wheel 8.

The hydraulic steering control system 4 further includes an electric motor 9 that is coupled to the steering column 7. In particular, a rotor 16 of the electric motor 9 is rotationally fixed (or at least rotationally fixable, e.g. via at least one clutch) to the steering column 7. For example, the electric motor 9 is fixed on the steering shaft and connected to the steering column 7 and to the hydraulic steering unit 5 (on the other side), e.g. with a spline connection. In a modification (not shown) the electric motor 9 at least rotationally fixable, e.g. via at least one clutch, to the steering shaft. Hence, a rotational position of the rotor 16 may be coupled to a rotational position of the steering wheel 8. The rotor 16 may receive and forward the mechanical input movements MIL, MIR. Accordingly, it can be considered that the rotor 16 forms part of the steering column 7 and the mechanical steering input 6.

A hydraulic steering unit assembly 5 provides hydrostatic steering. It includes at least a traditional hydraulic steering unit 5a (for hydrostatic steering) with at least one rotary meter / gear wheel set.

In the embodiment shown in more detail in Fig. 2, the hydraulic steering unit assembly 5 further includes an (optional) electronic valve assembly 5b that allows for electrohydraulic steering. The hydraulic steering unit assembly 5 hence allows for both electrohydraulic steering (by using the electronic valve assembly 5b) and traditional hydrostatic steering (using the hydraulic steering unit 5a).

The hydraulic steering unit assembly 5 is connected to a hydraulic fluid supply 3, for example at least one pump. In Fig. 1, this is schematically shown by a supply flow path 3a. The hydraulic fluid supply 3 supplies pressurized hydraulic fluid to the hydraulic steering unit assembly 5. The hydraulic fluid supply 3 "creates" a hydraulic pressure PS needed for normal operation. A return flow path 3b may return fluid to a tank and/or the hydraulic fluid supply 3.

In normal operation, the hydraulic steering unit assembly 5 supplies pressurized hydraulic fluid to the steering cylinder 2. The hydraulic steering unit assembly 5 is fluidly connected with the steering cylinder 2 via a first flow path 2a and a second flow path 2b. The pressurized hydraulic fluid can be provided to a first cylinder chamber via the first flow path 2a and to a second cylinder chamber of the steering cylinder 2 via the second flow path 2b.

The mechanical steering input 6 is functionally coupled to the hydraulic steering unit 5a of the hydraulic steering control system 4. The mechanical input movements MIL, MIR in the two possible opposite steering directions are applied to the hydraulic steering unit 5a. The hydraulic steering unit 5a supplies pressurized hydraulic fluid to the steering cylinder 2 based on the mechanical input movements/commands MIL, MIR. Hence, the operator can steer the vehicle 100 by applying the mechanical input movements MIL, MIR via the steering wheel 8. Optionally, the hydraulic steering unit assembly 5 includes the electronic valve assembly 5b and is also configured to supply pressurized hydraulic fluid to the steering cylinder 2 based on electronic steering commands.

The hydraulic steering control system 4 also includes pressure measurement means 10 for measuring the hydraulic pressure PS, e.g. as provided by the hydraulic supply unit 3. In Fig. 1, the pressure measurement means 10 is arranged at the flow path 3a, for example. The pressure measurement means 10 includes at least a first unit for pressure measurement, e.g. a first pressure sensor 11, pressure transducer, and/or pressure transmitter. The pressure measurement means 10 can include a second unit for pressure measurement, e.g. a second pressure sensor 12, pressure transducer, and/or pressure transmitter. This ensures redundancy if one of the first unit and the second unit fails.

Further, the hydraulic steering control system 4 has a controller 13. The controller 13 is connected to the electric motor 9 and to the pressure measurement means 10. Naturally, the controller 13 can be connected to further elements, e.g. to the hydraulic steering unit assembly 5 (especially to the electronic valve assembly 5b), to an input device for generating electronic steering commands (for example a joystick), and/or the like.

The hydraulic steering control system 4 is able to provide force feedback to the operator handling the steering wheel 8 (at least when a force feedback mode is active). For this, the electric motor 9 exerts torques for generating the force feedback to the mechanical steering input 6. The controller 13 may be configured to control the electric motor 9 accordingly.

The hydraulic steering control system 4 further includes a position sensor 14 and/or a torque sensor 15.

The position sensor 14 measures a rotational position of the rotor 16, the steering column 7, and/or the steering wheel 8. In this example, the steering wheel 8, the steering column and the rotor 16 are all rotationally fixed relative to each other. Naturally, in modifications (not shown), the assembly of the rotor 16, the steering column 7 and the steering wheel 8 could include at a gearbox between any one of these elements. However, the rotational movements and rotational positions would be still proportional in accordance with a transmission ratio.

In this exemplary embodiment, the position sensor 14 is included in the electric motor 9 and measures the rotational position of the rotor 16. The controller 13 is connected to the electric motor 9 and receives measurement data from the position sensor 14. Just for example, the position sensor 14 (or a further position sensor) could be provided at an upper end of the steering column 7 (an end of the steering column 7 facing the steering wheel 8) and be operatively connected with the controller 13.

The controller 13 can use the measurement data obtained via the position sensor 14 for controlling the electric motor 9, for example to recognize the presence, the steering direction, the "amount", and our the speed of the mechanical input movements MIL, MIR.

The torque sensor 15 measures the external torque applied to the rotor 16, the steering column 7, and/or the steering wheel 8 by the operator. Even in the case of the at least one gearbox between any one of these elements (not shown), the operator-induced external torques will be still proportional in accordance with the transmission ratio.

In the exemplary embodiment shown in Fig. 1, the torque sensor 15 is a dedicated torque sensor. The (dedicated) torque sensor 15 be included in the electric motor 9 or may be separate. By using a dedicated torque sensor 15, a particularly well-suited, precise and/or reliable torque measurement can be ensured.

The torque sensor 15 measures the external torque applied by the operator. Additionally or alternatively, the electric motor 9 as such can be used Said external torque can be indicative of mechanical input movements MIL, MIR. It can be indicative on how strongly the operator turns the steering wheel 8. The controller 13 is connected to the electric motor 9 and receives measurement data from the torque sensor 15. Just for example, the torque sensor 15 (or a further torque sensor) could be provided at an upper end of the steering column 7 (an end of the steering column 7 facing the steering wheel) and be operatively connected with the controller 13.

In general, the controller 13 can use the measurement data (from the position sensor 14 and/or the torque sensor 15) for controlling the electric motor 9, for example to recognize the presence, the steering direction, the "amount", and/or the speed of the mechanical input movements MIL, MIR. The controller 13 might also be able to use the measurement data for controlling the electronic valve assembly 5b.

At least one wheel angle sensor 17 for measuring the wheel angle can be installed in the vehicle 100. The controller 13 may be connectable to the wheel angle sensor 17 for receiving sensor data from the wheel angle sensor 17, for example wheel angle sensor position information. The hydraulic steering control system 4 can include the wheel angle sensor 17.

According to one aspect, a vehicle speed sensor 18 for measuring the vehicle speed can be installed in the vehicle 100. In this example, the vehicle speed sensor 18 is installed on a transmission 102 of the vehicle 100. The controller 13 may be connectable to the vehicle speed sensor 18 for receiving sensor data from the vehicle speed sensor 18, for example vehicle speed information. The hydraulic steering control system 4 can include the vehicle speed sensor 18.

It is noted that the wheel angle sensor 17 and the vehicle speed sensor 18 might be used in the force feedback mode to provide the optimal force feedback.

The electric motor 9 may apply, at least under some operation conditions, e.g. at least in the force feedback mode, restoring torques onto the mechanical steering input 6. The restoring torques may act on the mechanical steering input 6 in order to urge/bias the steerable wheels 101 towards a neutral position. Additionally or alternatively, the restoring torques may be applied to provide limited resistance against steering commands that that will move the steerable wheels 101 out of the neutral position. The restoring torques may depend (at least) on the wheel angle and/or the vehicle speed.

In other words, in a normal mode and/or the force feedback mode, the hydraulic steering control system 4 might be configured to exert with the electric motor 9, based on the wheel angle, a torque to move the steerable wheels 101 to a neutral wheel angle (i.e. to center) and/or to move the steering wheel 8 to its neutral position. The controller 13 may include a look-up table and/or algorithms to determine the restoring torques. The restoring torques may depend on the vehicle speed. With increasing vehicle speed, the restoring torques may increase (may become stronger). This provides more stable/controllable driving conditions for the operator.

It might happen that the hydraulic fluid supply 3 does not create sufficient hydraulic pressure PS or fails completely. In such cases, steering of the vehicle 100 by the electronic valve assembly 5b (if any) is not possible any longer. However, the operator can still steer the vehicle 100 by inputting the mechanical input movements MIL, MIR via the steering wheel 8. The hydraulic steering unit 5a has an emergency functionality in the case that there is no (or at least no sufficient) hydraulic pressure PS. In this case, the hydraulic steering unit 5a allows manual pumping of hydraulic fluid between the first chamber and second chamber of the steering cylinder 2. In this situation, the manual pumping is driven by the mechanical input movements MIL, MIR via the steering wheel 8. The hydraulic steering unit 5a may be configured to employ at least one of its rotary meters for the manual pumping. For example, if it comprises two rotary meters, (at least) one of them might be used for the manual pumping in the emergency mode.

However, the unassisted manual pumping of the hydraulic fluid would require a lot of effort from the operator. Maybe the operator can reach only slow changes of the movement direction of the vehicle 100 because the operator is not strong enough to turn the steering wheel 8 faster. Further, the operator may become exhausted from the effort of turning the steering wheel 8 for manual pumping soon.

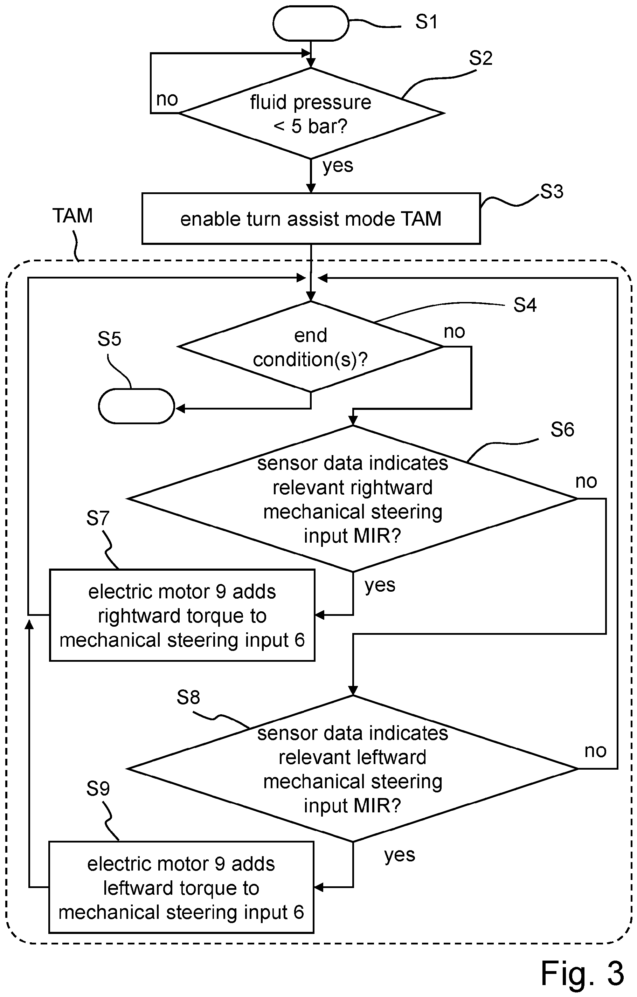

Hence, the pressure measurement means 10 measure the hydraulic (working) pressure PS provided by the hydraulic fluid supply 3. When the pressure measurement means 10 (for example at least one of the first unit and the second unit) indicate that the hydraulic pressure PS is lower than a minimum threshold, e.g. 5 bar, the controller 13 automatically activates a turn assist mode TAM (see Fig. 3).

Additionally or alternatively, the controller 13 may be configured to enable the turn assist mode TAM in response to other pre-determined signals. Such signals might be a signal from the hydraulic supply unit 3 that indicates failure and/or malopera-tion of the hydraulic supply unit 3 and/or an (intentional) activation signal inputted by the operator (e.g. via a button, a touchscreen, or any other user input).

It is noted that a ration between the external torque (applied by the operator) and the mechanical input change speed can be an indication that the operator needs assistance from the electric motor 9 for steering. The controller 13 may be configured to enable the turn assist mode TAM accordingly.

When it is determined with the pressure measurement means 10 that the hydraulic pressure PS is lower than the minimum threshold (e.g. lower than 5 bar), first the electric motor 9 needs to stop exerting restoring torques (forces) against the operator's steering commands. Otherwise, the electric motor 9 would work against the operator as in the normal mode and/or the force feedback mode.

When the turn assist mode TAM is enabled, the electric motor 9 supports mechanical input movements MIL, MIR applied to the mechanical steering input 6 by the operator. The electric motor 9 exerts additional torque in the same respective steering direction to the mechanical steering input. Hence, the operator needs less force/external torque for turning the steering wheel 8. This is especially relevant in the emergency mode when manual pumping by the operator is required for steering. The operator can turn the steering wheel 8 faster. A turning speed can be increased. This might help to meet regulatory demands, for example in achieving a certain vehicle turning radius (e.g. from straight ahead direction of movement) within a time limit.

In other words, the hydraulic steering control system 4 will exert torque with the electric motor 9 to help the operator to turn the steering wheel 8 (and hence to steer the vehicle 100) towards the intended steering motor until the steering direction is changed by the operator.

The hydraulic steering control system 4 may be configured such that the electric motor 9 exerts the additional torque based on the measurement data, e.g. under control of the controller 13.

Just for example, one of, several of, or all of the following aspects might be considered for determining whether additional torque (in the respective steering direction) is exerted (in the turn assist mode TAM):
- a mechanical input movement MIL, MIR towards the respective steering direction is applied;
- a mechanical input movement MIL, MIR towards the respective steering direction is applied (continuously) for at least a corresponding time period;
- a mechanical movement MIL, MIR towards the respective steering direction exceeds a corresponding threshold;
- a mechanical movement MIL, MIR towards the respective steering direction within a corresponding time period exceeds a certain threshold;
- an external torque towards the respective steering direction is applied;
- an external torque towards the respective steering direction is applied continuously for at least a corresponding time period;
- an external torque towards the respective steering direction exceeds a corresponding threshold;
- an external torque towards the respective steering direction exceeds a certain threshold for at least a corresponding time period;
- a mechanical input change speed exceeds a corresponding threshold;
- a ratio between the external torque and the mechanical input change speed; and
- a vehicle speed.

These factors may be referred to as relevance conditions.

Further, a value of the additional torque may be varied depending on at least one of, several of, or all of the relevance conditions mentioned above.

In general, in the turn assist mode TAM, the electric motor 9 may amplify the external torques based on the measurement data considering the one of, several, or all of the relevance conditions.

The additional torque may be limited to a maximum value in order to not surprise or overwhelm the operator. For example, a maximum of the additional torque applicable by the electric motor 9 in the turn assist mode TAM might be in the range from 8 Nm to 10 Nm.

As an example, the hydraulic steering control system 4 might be configured to exert said maximum of the additional torque towards the corresponding steering direction with the electric motor 9 when the operator turns the steering wheel 8 towards this steering direction with at least a certain mechanical input speed, e.g. at least with a certain rotational speed (e.g. measured in rotations per minute).

When the operator changes the steering direction, applying the torque towards the previous steering direction is stopped.

Optionally, the hydraulic steering control system 4 is configured to activate a vehicle speed maximum for the vehicle 100 when the turn assist mode TAM is activated. In other words, when the turn assist mode TAM is switched on, a "limp home speed" limit may be activated. This facilitates safe driving.

The hydraulic steering control system 4, especially the controller 13, may be able to use the wheel angle (e.g. measured with the wheel angle sensor 17) and/or the vehicle speed (e.g. measured with the vehicle speed sensor 18). For example, the controller 13 may be configured to predict, for example at least in the turn assist mode TAM, a maximum steering angle in the based on the wheel angle and/or the vehicle speed. The controller 13 may be configured to predict, at least in the turn assist mode TAM, the steering direction, e.g. based on the wheel angle, the vehicle speed, and/or the measurement data (from the positional sensor 14 and/or the torque sensor 15).

It should be noted that the electric motor 9 might exert, for the identical steering command, torques in opposite steering directions depending on whether the turn assist mode TAM is enabled or not: In the normal mode and/or the force feedback mode, the restoring torque urging towards the neutral wheel angle (i.e. urging towards the steering direction that is opposite to the intended steering direction) may be applied. In the turn assist mode TAM, the additional torque for increasing the wheel angle (i.e. urging towards the intended steering direction) is applied, maybe depending on one of, several of, or all of the relevance conditions.

It is also possible that the hydraulic steering control system 4 applies, in the turn assist mode TAM, the restoring torques while one of, several of, or all of the relevance conditions is/are not met but stops applying the restoring torques and instead exerts the additional torque in the same respective steering direction (as the present steering command) when the chosen one of, several of, or all of the relevance conditions are met.

Just as an example, the hydraulic steering control system 4 might, in the turn assist mode TAM, work as follows: While the operator does not operate the steering wheel 8 or operates the steering wheel 8 without the mechanical input change speed exceeding the corresponding threshold, the electric motor 9 is used to apply restoring torques. When the operator operates the steering wheel 8 towards one of the steering directions such that the mechanical input change speed exceeds the corresponding threshold, e.g. the operator turns the steering wheel 8 with the rotational speed exceeding the corresponding threshold (i.e. a steering wheel rotational speed threshold), the electric motor 9 stops exerting restoring torques but instead applies the additional torque in the same steering direction to support the operator.

The turn assist mode TAM may be automatically disabled, e.g. in the case that the hydraulic pressure PS exceeds the minimum threshold and/or upon a deactivation input from the operator.

Fig. 3 schematically shows some aspects of a method for controlling the hydraulic steering system 1. The method may be performed by the hydraulic steering control system 4 (and hence by the hydraulic steering system 1).

The method starts at a step S1.

A step S2 includes checking whether the hydraulic pressure PS is below a minimum threshold, e.g. 5 bar. For example, this can be done by means of the pressure measurement means 10 and the controller 13. If the result is "no", step S2 is repeated. If the result is "yes", the method proceeds to a step S3.

The step S3 includes enabling the turn assist mode TAM.

In the turn assist mode TAM, a step S4 might be performed. The step S4 includes checking, e.g. by the controller 13, whether an end condition (or several end conditions) for disabling the turn assist mode TAM are fulfilled. If the result is "yes", the method may proceed to a step S5. In step S5, the turn assist mode TAM is disabled. For example, the method may go back (not shown) to step S1 or step S2. If the result is "no", the method proceeds to a step S6.

The step S6 includes checking, e.g. with the controller 13, whether measurement data (for example from the position sensor 14 and/or the torque sensor 15) indicates a relevant rightward mechanical steering input MIR. For judging on the relevance, it is referred to the relevance conditions described above as examples. If the result is "yes", the method proceeds to a step S7. If the result is "no", the method proceeds to a step S8.

The step 7 includes that the electric motor 9 exerts additional rightward torque to the mechanical steering input 6. A value of the additional torque may be fixed or varied depending on the measurement data (it is referred to the relevance conditions described above as examples). After performing step S7, the method may perform step S4 again, for example. Another exemplary option is to omit steps S4 and S5 in the method and to go back to step S1 or step S2 instead.

The step 8 includes checking, e.g. with the controller 13, whether measurement data (for example from the position sensor 14 and/or the torque sensor 15) indicates a relevant leftward mechanical steering input MIL. For judging on the relevance, it is referred to the relevance conditions described above as examples. If the result is "yes", the method proceeds to a step S9. If the result is "no", the method may perform step S4 again, for example. Another exemplary option is to omit steps S4 and S5 in the method and to go back to step S1 or step S2 instead.

The step 9 includes that the electronic motor 9 exerts additional leftward torque to the mechanical steering input 6. A value of the additional torque may be fixed or varied depending on the measurement data (it is referred to the relevance conditions described above as examples). After performing step S9, the method may proceed with step S4 again, for example. Another option would be to omit steps S4 and S5 in the method and to go back to step S1 instead, for example.

Naturally, the sequence of the "rightward block" with steps S6 and S7 and the "leftward block" with steps S8 and S9 could be interchanged. As a further modification, the steps S6 and S8 could be performed in parallel.

### List of reference signs:

- 1: hydraulic steering system
- 2: steering cylinder
- 2a: first flow path
- 2b: second flow path
- 3: hydraulic supply unit
- 3a: supply flow path
- 3b: return flow path
- 4: hydraulic steering control system
- 5: hydraulic steering unit assembly
- 5a: hydraulic steering unit
- 5b: electronic valve assembly
- 6: mechanical steering input
- 7: steering column
- 8: steering wheel
- 9: electric motor
- 10: pressure measurement means
- 11, 12: pressure sensor
- 13: controller
- 14: position sensor
- 15: torque sensor
- 16: rotor
- 17: wheel angle sensor
- 18: vehicle speed sensor
- 100: vehicle
- 101: wheel
- 102: transmission
- LA: longitudinal axis
- MIR: (rightward) mechanical steering input
- MIL: (leftward) mechanical steering input
- PS: hydraulic pressure
- TAM: turn assist mode
- S1 to S9: steps

## Claims

1. A hydraulic steering control system (4) for a hydraulic steering system (1) for a vehicle (100) with at least one hydraulic steering cylinder (2) and a hydraulic supply unit (3), wherein the hydraulic steering control system (4) comprises:
a hydraulic steering unit (5a) for fluid coupling with the at least one steering cylinder (2),
a mechanical steering input (6) that is mechanically coupled to the hydraulic steering unit (5a) for transferring mechanical input movements (MIL, MIR) in two opposite steering directions to the hydraulic steering unit (5a) for allowing manual control of the hydraulic steering unit (5a) by an operator,
an electric motor (9) coupled to the mechanical steering input (6) for applying, in a force feedback mode, force feedback for the operator to the mechanical steering input (6);
**characterized in that** the hydraulic steering control system (4) is configured to provide a turn assist mode (TAM) in which the electric motor (9) supports mechanical input movements (MIL, MIR) applied to the mechanical steering input (6) by exerting additional torque in the same respective steering direction to the mechanical steering input (6).

2. The hydraulic steering control system (4) according to claim 1, wherein the mechanical steering input (6) includes a steering column (7) and/or a steering wheel (8).

3. The hydraulic steering control system (4) according to any one of the preceding claims, wherein the hydraulic steering control system (4) is configured to automatically enable the turn assist mode (TAM) when a hydraulic pressure (PS) in the hydraulic steering system (1) is below a minimum threshold.

4. The hydraulic steering control system (4) according to claim 3, wherein the minimum threshold is in the range from 3,5 bar to 7 bar.

5. The hydraulic steering control system (4) according to any one of the preceding claims, wherein the hydraulic steering control system (4) comprises pressure measurement means (10) for measuring the hydraulic pressure (PS) that is provided by the hydraulic supply unit (3).

6. The hydraulic steering control system (4) according to claim 5, wherein the pressure measurement means (10) include at least one pressure sensor (11, 12) or at least two redundant pressure sensors (11, 12).

7. The hydraulic steering control system (4) according to any one of the preceding claims, further comprising an electronic controller (13) for controlling the electric motor (9).

8. The hydraulic steering control system (4 according to any one of the preceding claims, wherein the hydraulic steering control system (4) includes a position sensor (14) for sensing a mechanical input position of the mechanical steering input (6) and/or a mechanical input change speed of the mechanical steering input (6).

9. The hydraulic steering control system (4) according to any one of the preceding claims, wherein the hydraulic steering control system (4) includes a torque sensor (15) for measuring an external torque and/or force applied to the mechanical steering input (6).

10. The hydraulic steering control system (4) according to any one of the preceding claims, wherein a maximum of the additional torque applicable by the electric motor (9) in the turn assist mode (TAM) is at least 5 Nm.

11. The hydraulic steering control system (4) according to any one of the preceding claims, wherein the maximum of the additional torque applicable by the electric motor (9) in the turn assist mode (TAM) is [10 Nm at the maximum.

12. The hydraulic steering control system (4) according to any one of the preceding claims, wherein the mechanical steering input (6) is mechanically coupled to the hydraulic steering unit (5a) via the electric motor (9), wherein a rotor (16) the electric motor (9) transfers the mechanical input movements (MIL, MIR) from the mechanical steering input (6) to the hydraulic steering unit (5a).

13. A hydraulic steering system (1) for a vehicle, comprising:
at least one hydraulic steering cylinder (2); a hydraulic supply unit (3);
and the hydraulic steering control system (4) according to any one of the preceding claims;
wherein the hydraulic steering unit (5a) is fluidly connected to the hydraulic steering cylinder (2) and the hydraulic supply unit (3).

14. A method for operating a hydraulic steering system (1), for example according to claim 13, in a vehicle (100) with at least one hydraulic steering cylinder (2), a hydraulic supply unit (3), a hydraulic steering unit (5a) that is in fluid coupling with the at least one steering cylinder (2), a mechanical steering input (6) that is mechanically coupled to the hydraulic steering unit (5a) for transferring mechanical input movements (MIL, MIR) in two opposite steering directions to the hydraulic steering unit (5a) for allowing manual control of the hydraulic steering unit (5a) by an operator, and an electric motor (9) coupled to the mechanical steering input (6) for applying, in a force feedback mode, force feedback for the operator to the mechanical steering input (6), wherein the method comprises:
supporting, in a turn assist mode (TAM), mechanical input movements (MIL, MIR), which are applied to the mechanical steering input (6), by exerting additional torque in the same respective steering direction to the mechanical steering input (6) by means of the electric motor (9).
